Europäisches Patentamt

(19) European Patent Office

Office européen des brevets

(11) Publication number: **0 444 840 A1**

(12) **EUROPEAN PATENT APPLICATION**

(21) Application number: **91301471.8**

(22) Date of filing: **25.02.91**

(51) Int. Cl.⁵: **G01N 27/28**

(30) Priority: **27.02.90 US 486631**

(43) Date of publication of application:
**04.09.91 Bulletin 91/36**

(84) Designated Contracting States:
**DE FR GB IT**

(71) Applicant: **Ciba Corning Diagnostics Corp.**
**63 North Street**
**Medfield Massachusetts 02052 (US)**

(72) Inventor: **D'Orazio, Paul A.**
**28 Colonial Drive**
**Mendon, Massachusetts 01756 (US)**
Inventor: **Oesch, Urs**
**46 Fairlane way**
**Holliston, Massachusetts 01745 (US)**

(74) Representative: **Froud, Clive et al**
**ELKINGTON AND FIFE Beacon House 113**
**Kingsway**
**London WC2B 6PP (GB)**

(54) **Thick film reagent spreading and reagent immobilization layer.**

(57) A thick film reagent spreading and reagent immobilization layer disposed on a sensor device is described. The layer in the preferred embodiment is comprised of a dielectric material. The device includes at least two conductive substrates, each having a sensor site, with two sensor sites being bridged by the dielectric material layer. The device has particular application for analytical uses. The thick film layer is optimally disposed on an inert planar base.

EP 0 444 840 A1

## THICK FILM REAGENT SPREADING AND REAGENT IMMOBILIZATION LAYER

The present invention relates to analytical devices, and more particularly, to devices, including planar electrodes, incorporating a non-conducting material layer; the material being characterized by the ability to spread a reagent across the area of the device defined by the material layer and the ability to immobilize a reagent.

Dielectrics are defined as materials that do not conduct electricity. In the thick film microelectronics industry, the term "dielectric" refers to materials that are used to construct thick film capacitors and/or insulators. (See Handbook of Thick Film Hybrid Microelectronics, C.A. Harper, McGraw-Hill Book Company, Reissue, 1982.). Common applications for dielectrics include use as insulators between individual metal electrodes and leads on multi-electrode chips.

The dielectrics currently in use in the microelectronics field are glass-like in composition, composed of the oxides of various metals. Commercially available dielectric materials are typically provided as pastes, where the glass-like material is suspended in a matrix of organic fillers and solvents. The pastes are silk screened on inert substrates and fired at temperatures which are high enough to burn off the organics, leaving behind a layer of the glass-like material.

The use of the planar electrodes for analytical purposes has required modification of the certain analyte specific material embodiments of conventional electrodes known in the art. For example, non-planar, commercially available pH electrodes are constructed of pH sensitive glass (CORNING); and since it is not technically feasible to make planar electrodes out of this same glass, alternative compositions are required for application on planar ion selective electrodes. The application of planar electrodes for other analytical uses, i.e. where a free flowing reference electrode solution is required, has also presented problems.

Accordingly, it is a primary object of the invention to provide an ion selective electrode chip including at least two conductive substrates, each substrate having a sensor site, and incorporating a non-conductive material layer, which bridges at least two sensor sites on the chip to effect the spreading of an ion containing solution across the area of the chip defined by the material layer, such that the inherent electrical resistance between the bridged sensor sites is reduced following exposure to the ion containing solution.

It is another object of the invention to provide an analytical chip incorporating a non-conducting material layer, characterized by the ability to immobilize a reagent, the layer bridging an indicator sensor site and a reference sensor site on the chip, such that the sensors when read differentially in the "pseudo" dry state give a fixed and stable potential near zero.

A further object of the invention is to provide an analytical chip incorporating a dielectric material layer characterized by the ability to deliver a reagent to one location of the chip and which undergoes a reaction at another location on the chip as defined by the material layer.

It is still another objective of the present invention to provide an on-chip reference electrode incorporating a dielectric material layer having an amount of an immobilized ion over a conductive substrate/conductive substrate ion electrode.

A still further object of the invention is to provide an analytical chip incorporating a dielectric material layer linking an indicator and reference electrode and including a salt bridge through the dielectric material.

Another object of the invention is to provide a planar electrode incorporating a non-conducting material layer for use in an analytical instrument which can provide a sensitive response to a constituent of a test sample.

Yet another object of the invention is to provide a non-conducting material layer which functions as a planar solid support for chromatographic analysis.

With these and other object in view, as will be apparent to those skilled in the art, the invention resides in the combination of elements and conditions as set forth herein and covered by the claims appended hereto.

In general the invention is directed to an analytical chip including at least two conductive substrates, each conductive substrate having a sensor site, and a non-conductive reagent spreading and reagent immobilization layer. In particular, the layer comprises a dielectric material that is fabricated onto the chip such that it bridges at least two sensors sites on the chip. In one application, on exposure of a sensor site to an ion containing solution the solution spreads across the area of the chip defined by the material layer such that the inherent electrical resistance between the bridged sensor sites is reduced. The dielectric material layer is further characterized by the ability to immobilize a reagent for various analytical applications, for example, to form a reference electrode comprising a bridged indicator sensor site and a reference sensor site. Scanning electron micrographs of the fabricated dielectric material layer show a sponge-like structure comprised of small particles surrounded by open spaces.

An example of a dielectric material of the present invention comprises a mixture of finely divided particles of:

a) 30-36% wt. barium oxide;
b) 20-25% wt. bismuth oxide;

c) 17-20% wt. lead oxide;

d) 14-18% wt. titanium oxide;

e) 1-3% wt. iron oxide; and

f) 1-2% wt. zinc oxide, dispersed in a matrix of organic fillers and solvents.

The following terms as used in the specification and claims are defined as:

Capacitor: a device that can store electrical charge when voltage is applied.

Chloridize: to form a layer of an insoluble metal chloride salt over a metal. A chloridized silver electrode in contact with a constant concentration of chloride ion in solution is a standard reference electrode used in electrochemical cells.

Concentration decade: a ten-fold change in the concentration of an analyte in solution.

Insulator/Dielectrics: materials that do not conduct electricity.

Indicator electrode: an electrode which develops an electrical signal, the magnitude of which is proportional to the concentration of an analyte in solution. The indicator and reference electrodes, when connected by an electrolyte or salt bridge, make up a complete electrochemical cell.

Nernstian: in a potentiometric sensor, the linear relationship between the logarithm of the concentration of an analyte in solution and the electrical potential developed at this sensor as predicted by the Nernst Equation. If a sensor has ideal Nernstian behavior, a plot of log [concentration] versus potential yields a line with a slope equal to +59.2 millivolts for a singly charged positive species and -59.2 for a singly charged negative species at a temperature of 25°C.

Potentiometric electrode: a sensor whose electrical potential, when measured relative to a reference electrode, is proportional to the concentration of an analyte in solution.

Pseudo dry state: a condition of a non-conducting material layer where some residual liquid characteristics are retained in the layer after application and drying of a reagent containing solution.Reagent: an element or compound which participates in a chemical reaction; and where the element or compound may carry a charge of electricity.

Reference electrode: an electrode which develops a constant potential in solution, independent of any chemical characteristic of the solution.

Thick film: a film applied using screen printing technology associated with metallized or insulating pastes as the printing materials

Wicking : the spreading of a reagent solution across the area of a chip defined by a dielectric material.

Referring to the accompanying drawings:

FIG. 1 is a top plan view of one embodiment of the analytical chip of the present invention.

FIG. 2 is a top plan view of another embodiment of the analytical ship of the present invention.

FIG. 3 shows the potentiometric response to chloride ion.

FIG. 4 shows the changes in potential across a Ag/AgCl sensor site following time sequenced application of various concentrations, high then low, of an NaCl solution and the resulting equilibrium potential.

FIG. 5 shows the changes in potential across a Ag/AgCl sensor site following time sequenced application of various concentrations, low then high, of an NaCl solution and the resulting equilibrium potential.

FIG. 6 shows the changes in potential across a pCO$_2$ sensor following time sequenced exposure to 3%, 6% and 12% CO$_2$ (gas).

FIG. 7 shows the resistance between two silver sensors bridged by a dielectric material before and after application of a NaCl solution.

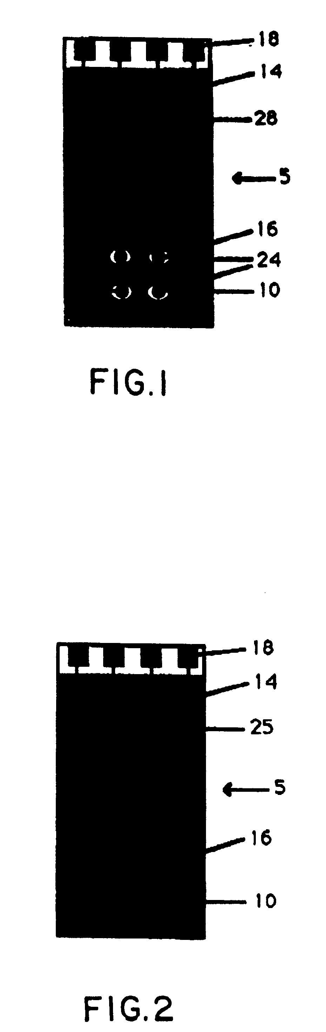

Referring to FIG. 1, the analytical chip of the present invention, generally indicated by reference numeral 5, is shown as having a base component 10 which is comprised of an inert substrate. At least two conductive substrates are disposed on the base; each of the conductive substrates including a lead member 14, a sensor site 16 and a contact area 18. The chip also includes a first dielectric material 24 disposed on the base to form a layer bridging two sensor sites. The area of the chip covered by the first dielectric material layer may extend beyond the sensor sites; and is shown by an oval configuration in FIG. 1. A second dielectric material 28 having a composition which differs from the first dielectric material is disposed on the chip to form a layer over the lead members, as an insulator.

The configuration of the base component 10 is a plane in the preferred embodiment. The size of the plane will vary in accordance with the number of conductive substrates fabricated onto the base and the design requirements attendent for various applications of the chip.

There are many factors to be considered in selecting an inert substrate for a base; such factors are described in chapter four of the Harper handbook. A comparison of ceramic compositions and their properties is provided by Harper. The composition of the base in the preferred embodiment is alumina.

The conductive substrate is ordinarily comprised of a conductive metal and an inorganic binder, both of which are finely divided and dispersed in an organic medium. The conductive metal may consist of silver, gold, platinum or mixtures and alloys thereof, the choice of which depends on the performance characteristics sought for a particular analytical application. The selected conductive substrate is fabricated onto the chip by conventional screening and firing techniques. In the examples provided below, silver is the preferred conductive substrate, unless otherwise stated.

The first dielectric material layer 24 of the present invention is characterized by its inherent properties relating to reagent spreading and reagent immobilization. The properties have particular application for analytical uses of the device. In the preferred embodiment the first dielectric material comprises a mixture of finely divided particles of:

    a. 33.1% wt. barium oxide;

    b. 22.6% wt. bismuth oxide;

    c. 18.9% wt. lead oxide;

    d. 16.5% wt. titanium oxide;

    e. 2.4% wt. iron oxide; and

    f. 1.4% wt. zinc oxide,

the particles being dispersed in a matrix of organic fillers and solvents. An alternative to the preferred embodiment having the same properties is available as of the filing date of this application from E.I. DuPont de Nemours & Co. as product number 5217. It is understood that modifications of the composition may be made by those skilled in the art, and tested as noted below to determine if such modified compositions possess the properties characteristic of the described first dielectric material layer.

The first dielectric material is fabricated onto the base to form a layer which bridges two sensor sites. A scanning electron micrograph of the fabricated dielectric material layer shows a sponge-like structure comprising small particles (0.25-0.75 u) surrounded by open spaces. The spaces provide means for the reagent spreading and reagent immobilization properties of the first dielectric material layer.

In the dry state an inherent electrical resistance exists between the bridged sensor sites of an ion selective electrode chip. On exposure of a sensor site to an ion containing solution the electrical resistance between the bridged sensor sites is reduced. The ion containing solution spreads or wicks across the dielectric material layer, electrically bridging the sensor sites. The ability to move a solution from one point to another on a chip to form an electrolyte bridge or liquid junction enables the chip to be used for analytical purposes. The spreading of a chemical species from one point to another on the non-conducting material would further enable the material layer to be utilized as a solid support for chromatographic analysis.

A further characteristic of the first dielectric material is the ability to trap or immobilize a fixed reagent activity over a sensor site to form, for example, a reference electrode. A reference electrode of this type is examplified by the trapping of a fixed chloride activity over an Ag/AgCl sensor site, resulting in a "pseudo" solid-state reference electrode. Additional analytical applications of these characteristics will become apparent to those skilled in the art; notably the trapping of a buffer or other reagent over a sensor requiring a reagent trapped over it.

Referring again to FIG. 1, the second dielectric material 28 is shown to be layered over the first dielectric material 24. It is noted that this orientation is not a requirement of the invention, as the first dielectric material layer may be disposed over the second dielectric material layer and retain the properties as described and shown by the examples, and as claimed. It is noted that some analytical applications of devices incorporating the first dielectric material layer may not require the use of a second dielectric material layer.

EXAMPLE 1

An examination was made of various compositions of dielectric materials for pH response.

Four different dielectric materials were examined in this example:

    1. DuPont "5704" (blue) dielectric material, recommended firing temperature (T) = 850°C.

    2. DuPont "5217", (tan) dielectric material, recommended firing temperature (T) = 950°C.

    3. DuPont "9137" (green) dielectric material, recommended firing temperature (T) = 480°C.

    4. Johnson Matthey "601", (white) dielectric material, recommended firing temperature (T) = 850°C.

These materials, generally represented by numeral 25 in FIG. 2 were layered by silk screening and firing (T=650°C and T=950°C) over planar silver sensor sites and lead members, which had themselves been silk screened and fired (T = 850°C) on an alumina substrate base using a silver containing paste (DuPont 6160). The design of the chip is shown in FIG. 2.

The pH response of each material was then tested by immersing the chip in a series of pH buffers and reading the resulting electrical potential against an external silver/silver chloride reference electrode filled with saturated potassium chloride. In the case of "5704", "9137", and "601" dielectric material layers there was no measurable potential between the chip bearing the dielectric and the reference electrode.

In the case of the "5217" a measurable potential was developed. It was also noticed that when this material was partially immersed into solution, liquid would start to "wick" into the dry section of the layer, indicating that liquid was being absorbed by the layer and contacting the underlying silver sensor sites.

EXAMPLE 2

Chloride Response of Ag/AgCl Sensor Sites Under Dielectric Composition

In order to demonstrate that the ion containing solution was being absorbed by the layer of dielectric material and contacting the underlying silver sensor sites, the silver sensor sites were chloridized through the dielectric layer and then the potentiometric response to chloride ion solutions was tested.

The silver sensor sites were electrochemically chloridized from a solution of 0.1M HCl at a current of 0.05mA per sensor for 10 minutes against a platinum cathode. In the experimental chips of this example there were a total of four sensors for a total current of 0.20mA for 10 minutes. If the chloride solution was being absorbed by the layer of dielectric material, chloride ions would contact the sensor sites both during the chloridization and the testing steps which followed. A resulting potentiometric response to chloride ion would thus be expected.

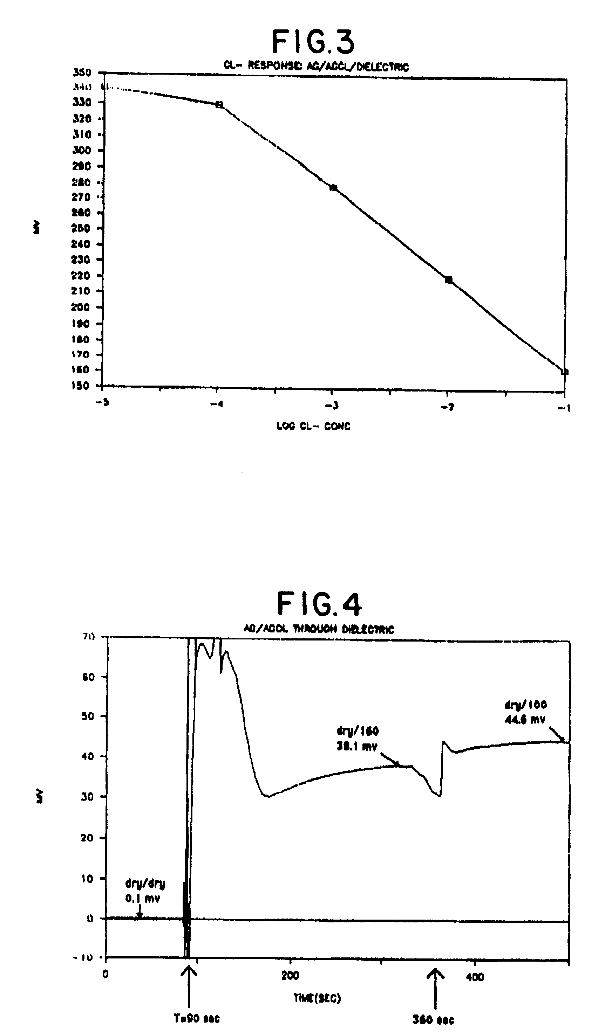

Several chips were prepared as described above and tested by immersion in NaCl solutions ranging in concentration from $1 \times 10^{-5}$ to 0.1 molar with an external silver/silver chloride reference electrode. Potentiometric response to chloride ion obtained from this example is shown in FIG. 3. The slope is -58 mv/concentration decade (theoretical = -59.2) over the range $1 \times 10^{-3}$ to 0.1 molar. The results indicate that ionic salts in solution are capable of being absorbed into the layer of dielectric material and migrating to an underlying sensor site.

EXAMPLE 3

Ag/AgCl/Dielectric Composition as an On-Chip Reference Electrode

An advantage of a dielectric material layer when used in conjunction with an underlying Ag/AgCl sensor would be the ability to form an on-chip reference electrode by "trapping" a fixed concentration of chloride ion in the area above a sensor site or delivering the chloride ion to the sensor site through the layer of dielectric material immediately before measuring an indicator electrode reaction of interest. The dielectric material layer may then also serve as the required salt bridge between the indicator and reference electrodes.

Each zone of the first dielectric material layer bridges two sensor sites. Further, the dielectric material layer may be placed either under or over a second (insulating) dielectric material layer by reversing the order in which these two materials are silk screened.

Several chips were chloridized as described in Example 2. They were then rinsed superficially with water and allowed to dry under ambient conditions. It was anticipated that some residual chloride ion and water from the chloridization step would remain in the first dielectric material layer. Each pair of bridged sensor sites was then tested by connecting one sensor site to the reference side and the other sensor site to the indicator side of an electrometer.

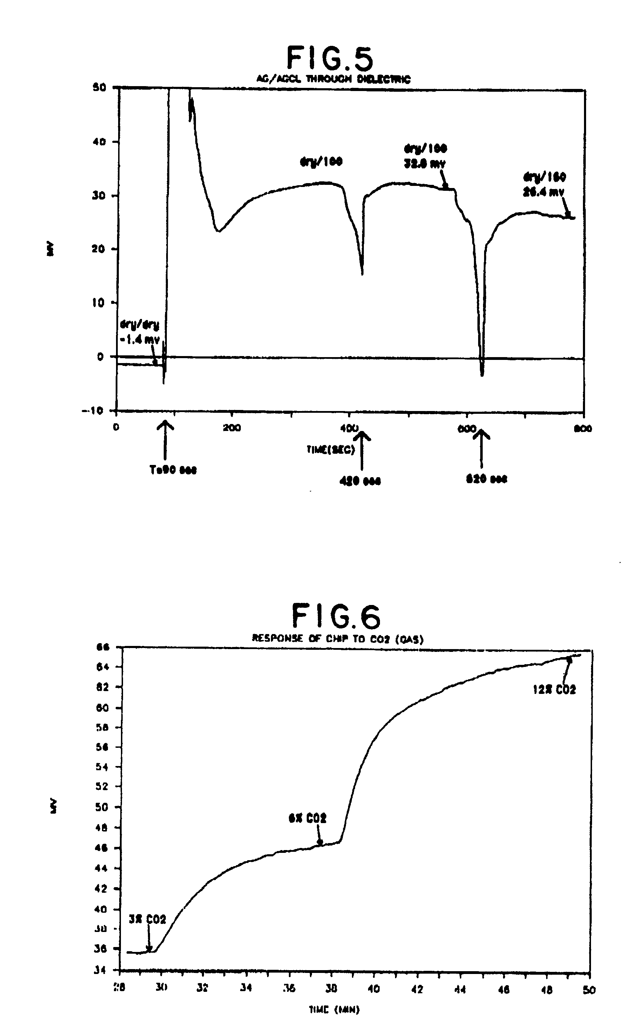

Referring to FIG. 4, in the pseudo dry state, starting at Time = 0 sec, the potential between a pair of sensor sites is stable and close to zero millivolts. This shows that the two sensor sites are closely matched and further that they are bridged by a conductive path through the dielectric material layer, since a potential could not otherwise be measured. A drop of 160 mM NaCl (approximately 3 microliters) was then applied over one of the sensor sites at Time = 90 sec, leaving the other sensor site dry. A slow change to an equilibrium potential of 38.1 mv is shown in FIG. 4. The drop of 160 mM NaCl was then blotted dry and replaced by a drop of 100mM NaCl at Time = 360 sec. The change in potential to a more positive value of 44.6 mv indicates a response to chloride ion at this indicator sensor site and further that the other (bridged) sensor site is acting as a reference electrode without being exposed to the test chloride solution except through the conductive path of the first dielectric material layer. FIG. 5 shows that the experiment may be conducted in the reverse order (applying 100 mM NaCl at Time = 90 sec and 420 sec, then 160 mM NaCl at Time = 620 sec) with the same sensitivity to chloride.

Sub-Nernstian response slopes toward chloride of approximately -30 mv(decade are obtained in both the FIG. 4 and 5 examples. This lower than theoretical result is not unexpected owing to the extreme carryover when the test chloride sample was changed from 160 mM to 100mM NaCl and vice versa.

EXAMPLE 4

Ag/AgCl/Dielectric as an On-Chip Reference Electrode in a Thick Film $pCO_2$ Sensor

The use of Ag/AgCl/Dielectric material of the preferred embodiment as an on-chip reference electrode was demonstrated by constructing a thick film $pCO_2$ sensor. The chip design was the same as that shown in FIG. 1, except that one of the silver sensor sites under the layer of the first dielectric material layer was replaced by a pH sensor site made of ruthenium dioxide. The ruthenium dioxide sensor is silk screened using DuPont BIROX™ 9318 paste and fired at 650° C. Chloridization of the silver sensor was carried out in a solution of 0.1 M NaCl adjusted to pH 9.2. The chip was rinsed superficially with water and dried under ambient conditions, in order to retain some NaCl within the layer of first dielectric material. If the chip is to function as a $CO_2$ sensor, $CO_2$ in the gas phase must dissolve within the liquid held by the first dielectric material layer and thus change its pH. The pH change is then sensed by the ruthenium dioxide and is proportional to the $CO_2$ concentration in the gas phase. Meanwhile, the Cl concentration at the on-chip reference sensor site must remain constant.

The $CO_2$ chip was tested as follows:

The chloridized silver sensor site was connected to the "reference" side and the ruthenium dioxide sensor site was connected to the "indicator" side of an electrometer. The chip was dry at this point. The first dielectric material layer was then exposed to 3% $CO_2$ gas which had been humidified by bubbling through water. A stable potential was obtained in about 30 minutes, during which the first dielectric material layer was wetted by the humidified gas and equilibrium with $CO_2$ was reached.

The chip was then exposed to 6% followed by 12% $CO_2$. The resulting potential changes, as shown in FIG. 6, are proportional to the log [$CO_2$] with a near-theoretical response slope.

EXAMPLE 5

Resistance Measurements Across the First
Dielectric Material

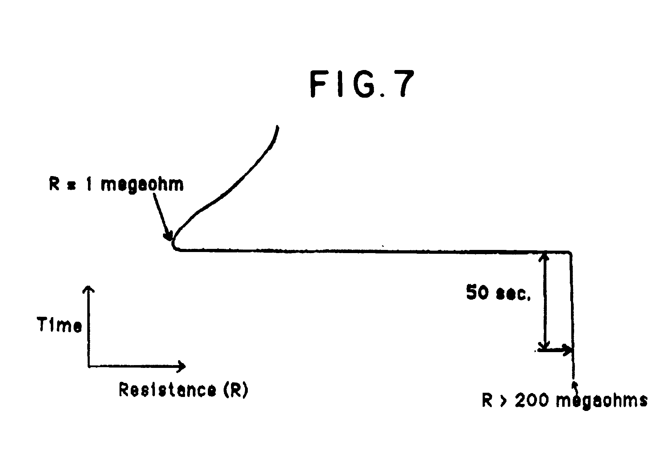

The electrical resistance between two sensor sites bridged by the first dielectric material layer of the preferred embodiment was measured before and after wetting with a solution of 160 mM NaCl. Referring to FIG. 7:

1. The initial resistance between the two sensor sites prior to wetting the first dielectric material layer is greater than 200 megaohms.

2. At the point marked with the arrow, 5 ul of 160 mM NaCl was applied directly over one of the sensor sites.

3. The solution could be visually seen wicking across the first dielectric material layer. About 50 seconds following application, the resistance between the two sensor sites dropped sharply to a value of approximately 1 megaohm, followed by a slow rise toward a higher resistance. The sharp drop indicates that the two sensor sites have been bridged by a conductive path through the first dielectric material. The cause of the slow rise in resistance may be explained by the evaporation of water from the dielectric layer.

4. The oval area of first dielectric material layer may also be screened under the second (insulator) dielectric material layer. Resistance measurements utilizing the first dielectric material layer with this type of orientation yield the same results as noted above.

EXAMPLE 6

Physical and Chemical Characterization of the
Analytical Chip Incorporating the First Dielectric
Material Layer

In the preferred embodiment the ion selective electrode chip comprises:
a. an inert substrate base;
b. two or more conductive substrates disposed on said base, each of said conductive substrates including a sensor site; and wherein an inherent electrical resistance exists between the sensor sites; and
c. a first dielectric material disposed on said base to form a layer, such that the first dielectric material layer bridges at least two sensor sites of said conductive substrates; and wherein on exposure of the first dielectric material layer to an ion containing solution the electrical resistance between said bridged sensor sites is reduced.

The first dielectric material comprises a mixture of finely divided particles of:
a) 30-36% wt. barium oxide;
b) 20-25% wt. bismuth oxide;
c) 17-20% wt. lead oxide;
d) 14-18% wt. titanium oxide;
e) 1-3% wt. iron oxide; and
f) 1-2% wt. zinc oxide, the particles being dispersed in a matrix of organic fillers and solvents.

Scanning electron micrographs of the fabricated first dielectric material layer show a sponge-like structure comprised of solid particles (0.25-0.75 u) surrounded by open spaces. The first dielectric material of the preferred embodiment was fired at temperatures of 650° and 850° C with no obvious differences in the properties shown by the examples.

Claims

1. A device comprising:
a. an inert substrate base;
b. two or more conductive substrates disposed on said base, each of said conductive substrates including a sensor site; and wherein an inherent electrical resistance exists between two sensor sites; and
c. a first dielectric material disposed on said base to form a layer such that the first dielectric material layer bridges said two sensor sites; and wherein on exposure of the first dielectric material layer to an ion containing solution the electrical resistance between the bridged sensor sites is reduced.

2. A device as recited in Claim 1, wherein said device is an ion selective electrode.

3. A method of reducing the inherent electrical resistance between a pair of conductive substrates, each having a sensor site, of an electrode device comprising:
a. bridging a pair of sensor sites of said conductive substrates with a layer of dielectric material; and
b. exposing said dielectric material layer to an ion containing solution.

4. An ion containing solution as recited in Claims 1 and 3, wherein said ion containing solution comprises an aqueous saline solution.

5. A dielectric material as recited in Claims 1 and 3, wherein said first dielectric material layer includes means for effecting the spreading of the ion containing solution across the area of the device defined by the dielectric material layer.

6. The means as recited in Claim 5, wherein said means include capillary action.

7. A device comprising:
   a. an inert substrate base;
   b. two or more conductive substrates disposed on said base, each of said conductive substrates including a sensor site, and wherein at least one sensor site serves as an indicator site, and wherein at least one sensor site serves as a reference site;
   c. a first dielectric material disposed on said base to form a layer, such that the first dielectric material layer bridges two sensor sites, including an indicator site and a reference site; and
   d. a reagent immobilized within said first dielectric material layer, wherein said reagent provides a fixed potential at the surface of the reference sensor site.

8. A device as recited in Claim 7, wherein said reagent is a chloride containing solution.

9. A device as recited in Claim 8, wherein said sensor sites are electrochemically chloridized with a chloride containing solution.

10. A device as recited in Claim 7, wherein upon exposure of the indicator site to a test solution, a detectable potentiometric response is generated and wherein a non-exposed reference site is used as a reference.

11. A device comprising:
    a. an inert substrate base;
    b. two or more conductive substrates disposed on said base, each of said conductive substrates including a sensor site;
    c. a first dielectric material fabricated on said base to form a layer, such that the first dielectric material bridges two sensor sites; and
    d. a reagent immobilized by said first dielectric material layer, wherein said reagent participates in a reaction with an analyte at, at least one of said bridged sensor sites.

12. A device as recited in Claims 1, 3, 7 and 11, wherein said conductive substrate is silver.

13. A device as recited in Claims 1, 3, 7 and 11, wherein said first dielectric material comprises:
    a. 30-36% wt. barium oxide;
    b. 20-25% wt. bismuth oxide;
    c. 17-20% wt. lead oxide;
    d. 14-18% wt. titanium oxide;
    e. 1-3% wt. iron oxide
    f. 1-2% wt. zinc oxide.

14. A device as recited in Claim 11, wherein said fabricated dielectric material layer includes means for spreading and immobilizing a reagent.

15. A device as recited in Claims 1, 3, 7 and 11, wherein said device is planar in configuration.

16. A device as recited in Claims 1, 3, 7 and 11, wherein each of said conductive substrates further comprises:
    a. a contact area; and
    b. a lead member.

17. A device as recited in Claim 18, wherein said contact area is a terminal pad.

18. A device as recited in Claim 16, wherein said device further comprises a second dielectric material having a composition that is different from said first dielectric material, and being layered over the lead members of said conductive substrates as an insulator.

19. A device as recited in Claim 16, wherein said second dielectric material is layered over the first dielectric material layer in areas where said first dielectric material is layered over the lead member of said conductive substrates.

20. A device as recited in Claim 11, wherein said device comprises a reference electrode.

21. A device as recited in Claim 18, wherein said first dielectric material is layered over the second dielectric material layer in areas adjacent to the bridged sensor sites.

22. A device as recited in Claims 1, 3, 7 and 11, wherein said base comprises a ceramic substrate.

23. A device as recited in Claim 11, wherein said device comprises a chromatography medium.

24. A device as recited in Claim 11, wherein said analyte comprises $pCO_2$.

25. A device as recited in Claim 11, wherein said ana-

lyte comprises an ion.

FIG.1

FIG.2

# FIG.3

CL- RESPONSE: AG/AGCL/DIELECTRIC

MV

LOG CL- CONC

# FIG.4

AG/AGCL THROUGH DIELECTRIC

MV

TIME(SEC)

dry/dry
0.1 mv

dry/160
38.1 mv

dry/160
44.6 mv

T=90 sec

360 sec

10

# FIG.5

AC/AGCL THROUGH DIELECTRIC

# FIG.6

RESPONSE OF CHIP TO CO2 (GAS)

# FIG.7

R ≈ 1 megaohm

Time

Resistance (R)

50 sec.

R > 200 megaohms

European Patent
Office

**EUROPEAN SEARCH REPORT**

Application Number

EP 91 30 1471

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8 900 287 (TERUMO K.K.)(12-01-1989) * Abstract * & EP-A-366 795 (09-05-1990) * Page 2, lines 4-8; figures 1A,1B * | 1-6,15-19 | G 01 N 27/28 |
| Y | EP-A-0 095 946 (FUJI PHOTO FILM CO.) * Abstract; page 4, lines 8-14; page 13, lines 6-10; figure 1 * | 1-6,15-19 | |
| A | WO-A-8 904 479 (BIOLOGIX) * Abstract; page 16, line 33 - page 17, lines 3,10-17; figure 1 * | 1,7-9, 11,12, 14,15, 20 | |
| A | PATENT ABSTRACTS OF JAPAN, vol. 10, no. 22 (P-424)[2079], 28th January 1986; & JP-A-60 174 944 (FUJI) 09-09-1985 * Whole document * | 1,7,10 | |
| A | WO-A-8 602 732 (UNILEVER) * Abstract; page 5, lines 16-30; figure 3 * | 1-3 | TECHNICAL FIELDS SEARCHED (Int. Cl.5) G 01 N |
| A | EP-A-0 122 420 (BOEHRINGER) * Abstract; figure 2 * | 1,7 | |

The present search report has been drawn up for all claims

| Place of search | Date of completion of the search | Examiner |
|---|---|---|
| THE HAGUE | 29-05-1991 | KEMPF G.V. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)